# EUROPEAN PATENT SPECIFICATION

(11) **EP 1 938 493 B1**
(45) Date of publication and mention of the grant of the patent: **08.10.2014**
(21) Application number: 06813760.3
(22) Date of filing: 24.08.2006
(51) Int. Cl.: H04L 1/00

(54) **VARIED TRANSMISSION TIME INTERVALS FOR WIRELESS COMMUNICATION SYSTEM**
VARIATION DER ZEITABSTÄNDE ZWISCHEN ÜBERTRAGUNGEN FÜR IN EINEM DRAHTLOSEN KOMMUNIKATIONSSYSTEM
INTERVALLES DE TEMPS D'EMISSION VARIES DE SYSTEME DE COMMUNICATION SANS FIL

(30) Priority: 24.08.2005 US 711145 P; 27.10.2005 US 260932
(43) Date of publication of application: 02.07.2008
(60) Divisional application: 13178709.5
(73) Proprietor: Qualcomm Incorporated, San Diego, CA 92121 (US)
(72) Inventor: GOROKHOV, Alexei, San Diego, California 92130 (US); TEAGUE, Edward H., San Diego, California 92130 (US); KHANDEKAR, Aamod, San Diego, California 92122 (US)
(74) Representative: Heselberger, Johannes
(86) International application number: PCT/US2006/033269
(87) International publication number: WO 2007/025160

(56) References cited:
- EP-A- 1 061 687
- EP-A2- 1 286 490
- WO-A-2004/086711
- LETTIERI P ET AL: "Adaptive frame length control for improving wireless link throughput, range, and energy efficiency" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, vol. 2, 29 March 1998 (1998-03-29), pages 564-571, XP010270390 ISBN: 0-7803-4383-2
- FAVRE P ET AL: "SELF-ADAPTIVE TRANSMISSION PROCEDURE" IBM TECHNICAL DISCLOSURE BULLETIN, IBM CORP. NEW YORK, US, vol. 19, no. 4, September 1976 (1976-09), pages 1283-1284, XP000759781 ISSN: 0018-8689

## Description

### CROSS-REFERENCE TO RELATED APPLICATIONS

This application claims the benefit of U.S. Provisional Application Serial No. 60/711,145, filed August 24,2005, entitled "Varied Transmission Time Intervals For Wireless Communication System".

### BACKGROUND

### I. Field

The following description relates generally to wireless communication networks and more particularly to varied transmission time interval size for forward link and reverse link transmissions in multi-user wireless systems.

### II. Background

Wireless networking systems are utilized by many to communicate wherever the user may be located at a particular time (*e.g.,* home, office, traveling, ...). Wireless communication devices have become smaller and more powerful to meet user needs while improving portability and convenience. Users have found many uses for wireless communication devices including cellular telephones, personal digital assistants (PDAs) and the like.

A typical wireless communication network (*e.g.,* employing frequency, time, and code division techniques) includes one or more base stations that provide a coverage area and one or more mobile (*e.g.,* wireless) user devices that can transmit and receive data within the coverage area. A typical base station can simultaneously transmit multiple data streams for broadcast, multicast, and/or unicast services, wherein a data stream is a stream of data that can be of independent reception interest to a user device.

Various factors can affect the efficiency and performance of wireless communication. For example, the amount of traffic or data communication occurring in a coverage area can reduce data transmission times and produce interference. The data rate can also affect wireless communication and overall throughput may be limited by the link level transmission rate. In the case of a limited transmission rate, typical packet sizes are relatively small, needing modest decoding horsepower. The transmission time intervals that should be utilized for the packets can differ depending on communication parameters or factors. For example, some packets should utilize short transmission time interval while others should utilize a longer transmission time interval to improve the wireless communication.

Document EP 1 286 490 A2 discusses a method for transmitting each burst signal with the transmission unit length appropriate for the transmission path condition at the time. Radio transmission path condition between a transmitting station and a receiving station is measured. A period during which the burst signal is to be transmitted is then determined on the basis of the measured radio transmission path condition. Before transmitted, the length of the burst signal is adjusted such that it is accommodated in such period.

Document EP 1 061 687 A1 discusses transmission and reception methods and devices which make it possible to automatically adjust the value of the guard time to be complied with between two successive blocks of data to be transmitted, according to the quality of reception of the data, by virtue of a marking signal, inserted in the data, the marking signal, determined on reception, representing the value of the guard time to be complied with on transmission. They apply to the transmission of OFDM symbols.

Document WO 2004/086711 A1 discusses a device and a method within a communications system where at least some part of the transmission is executed by means of radio waves, and where symbols are transmitted by means of Orthogonal Frequency Divisional Multiplexing, so called OFDM-technology, between a transmitting unit and a receiving unit, at which the symbol transmission is executed over a transmission channel in blocks of binary digits with a guard interval GI between said blocks, where transmitting unit is equipped with means to control the length of the guard interval (GI) with regard to the physical conditions for/of the transmission channel, so that the guard interval can be reduced without the disturbance susceptibility being increased, but instead increasing the capacity/throughput of the transmission channel by the time that is set free/made available being used to transmit information.

Based on the aforementioned, techniques for providing short transmission time interval duration to access terminals with good channel conditions, for example, can help achieve high peak throughputs. At substantially the same time, providing users having moderate to poor channel conditions, for example, can be provided with a long transmission time interval. In addition, flexible partitioning of bandwidth resources between short transmission time interval and long transmission time interval can benefit transmissions in multi-user wireless systems.

### SUMMARY

The invention is defined in independent claims 1 and 7. The following presents a simplified summary of one or more embodiments in order to provide a basic understanding of some aspects of such embodiments. This summary is not an extensive overview of the one or more embodiments, and is intended to neither identify key or critical elements of the embodiments nor delineate the scope of such embodiments. Its sole purpose is.to present some concepts of the described embodiments in a simplified form as a prelude to the more detailed description that is presented later.

According to a feature is a method for assigning a transmission time interval. The method includes measuring a channel condition of packet communicated by at least one wireless device. A data rate associated with the at least one wireless device is also ascertained. Next, a determination can be made whether to schedule a long transmission time interval or a short transmission time interval to the packet based in part on the detected channel condition and the ascertained data rate. Along transmission time interval can be scheduled, for example, if the channel condition is poor and/or there is a low data rate. A short transmission time interval can be scheduled if, for example, the channel condition is good and/or the data rate is high or fast. The method can be repeated for multiple wireless devices.

According to another embodiment is a processor for assigning one of multiple transmission time intervals to a user device. The system includes an optimizer that analyzes a condition of a wireless data packet and a data rate of the wireless data packet. Also included is a scheduler that schedules a transmission time interval to a packet, the transmission time interval is one of a long transmission time interval and a short transmission time interval.

According to another embodiment is a scheduler that schedules a user device to bandwidth and a transmission time interval. The scheduler can include a bandwidth module that determines a bandwidth to apply to each user device. The scheduler can also include a transmission time interval module that establishes whether the user device should have a short transmission time interval or a long transmission time interval. The transmission time interval module can also receive and analyze channel condition information and data rate information.

According to another embodiment is a system for scheduling wireless user devices to different transmission time intervals. The system can include means for ascertaining a channel condition for each user device. Also included in system can be a means for supporting at least two different interlacing structures. A means for scheduling each user device a respective transmission time interval can also be included in system.

According to yet another embodiment is a computer-readable medium having stored thereon computer-executable instructions for detecting a packet channel condition and ascertaining a packet data rate. The computer-readable medium can further have instructions for scheduling a long transmission time interval or a short transmission time interval to the packet based in part on the detected channel condition and the ascertained data rate. In another embodiment, the instructions can include scheduling a long transmission time interval if the packet channel condition is poor or the data rate is slow and/or scheduling a short transmission time interval if the packet channel condition is good or the data rate is fast.

To the accomplishment of the foregoing and related ends, one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 illustrates a wireless communication system in accordance with various embodiments presented herein.
FIG. 2 illustrates a multiple access wireless communication system according to one or more embodiments.
FIG. 3 illustrates a system for varied transmission time interval size for forward link and reverse link transmissions in multi-user wireless systems.
FIG. 4 illustrates a system for varied a transmission time interval size utilizing a channel condition and other communication parameters.
FIG. 5 illustrates flow chart of a methodology for assigning different users to different transmission time intervals.
FIG. 6 illustrates a short transmission time interval having six interlaces.
FIG. 7 illustrates a long transmission time interval having three interlaces.
FIG. 8 illustrates flexible partitions of resources with mixed interlaces.
FIG. 9 illustrates an H-ARQ transmission timing.
FIG. 10 illustrates an H-ARQ interlace structure for extended transmission duration assignments
FIG. 11 illustrates a flow chart of a methodology for transmitting a forward-link data packet.
FIG. 12 is a flow chart of a methodology for transmitting a reverse-link data packet.
FIG. 13 illustrates a wireless communication environment that can be employed in conjunction with the various systems and methods described herein.

### DETAILED DESCRIPTION

Various embodiments are now described with reference to the drawings. In the following description, for purposes of explanation, numerous specific details are set forth in order to provide a thorough understanding of one or more aspects. It may be evident, however, that such embodiment(s) may be practiced without these specific details. In other instances, well-known structures and devices are shown in block diagram form in order to facilitate describing these embodiments.

As used in this application, the terms "component," "system," and the like are intended to refer to a computer-related entity, either hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets (*e.g.,* data from one component interacting with another component in a local system, distributed system, and/or across a network such as the Internet with other systems by way of the signal).

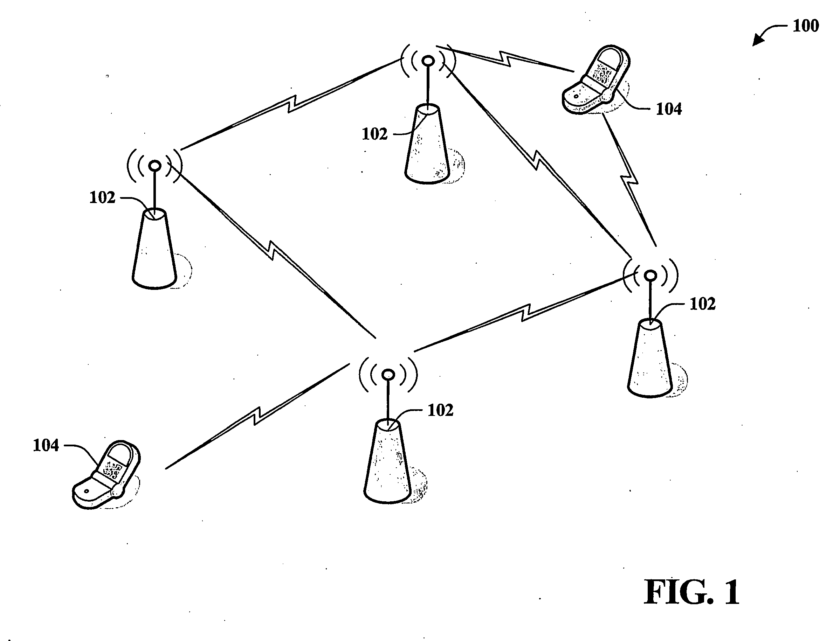

Referring now to the drawings, **FIG.1** illustrates a wireless communication system 100 in accordance with various embodiments presented herein. System 100 can comprise one or more access point(s) 102 that receive, transmit, repeat, *etc.,* wireless communication signals to each other and/or to one or more mobile devices 104. Access point(s) 102 can represent an interface between wireless system 100 and a wired network (not shown).

Each access point 102 can comprise a transmitter chain and a receiver chain, each of which can in turn comprise a plurality of components associated with signal transmission and reception (*e.g.,* processors, modulators, multiplexers, demodulators, demultiplexers, antennas, ...). Mobile devices 104 can be, for example, cellular phones, smart phones, laptops, handheld communication devices, handheld computing devices, satellite radios, global positioning systems, PDAs, and/or other suitable devices for communicating over wireless system 100. In wireless system 100, the periodic transmission of small data packets (commonly referred to as beacons) from access point 102 can make known the presence of wireless system 100 and transmit system 100 information. Mobile devices 104 can sense the beacons and attempt to establish a wireless connection to access points 102 and/or to other mobile devices 104.

System 100 facilitates scheduling varied transmission time intervals (TTIs) to one or more users using mobile device(s) 104 to accommodate the communication channels and network conditions. System 100 can automatically detect, receive, and/or infer a channel condition, bandwidth, data rate, and/or various other communication parameters to determine whether a long TTI or a short TTI is best for the data transmission.

A component located in mobile device 104 can operate in conjunction with one or more access point 102 to facilitate monitoring the capabilities of the mobile device 104, such as the device's 104 decoding capabilities. Alternatively or in addition, the access point 102 can detect this information and schedule the respective data packets to an optimal TTI duration taking into account the various communication parameters, including the amount of traffic in the network.

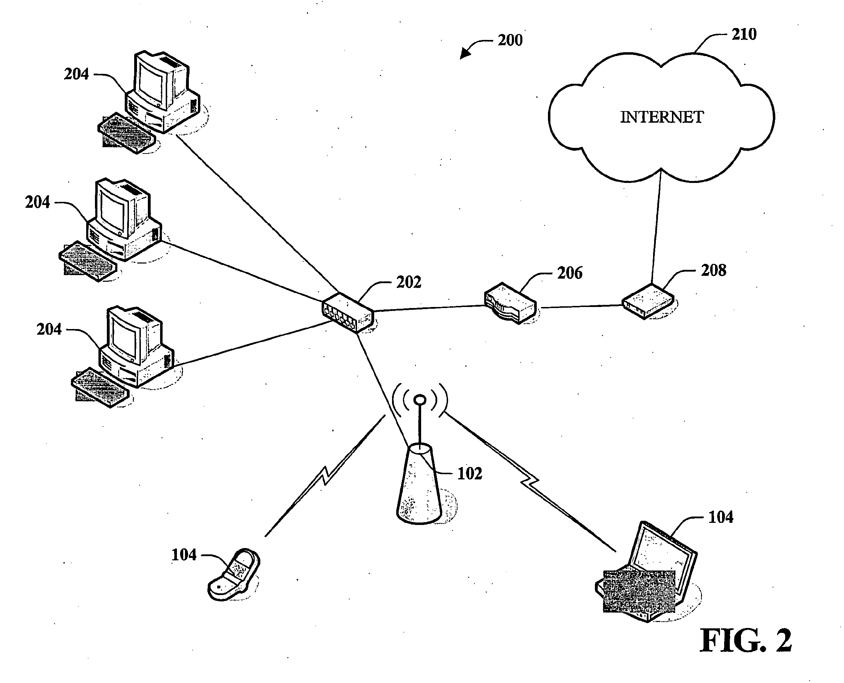

**FIG. 2** is an illustration of a multiple access wireless communication system according to one or more embodiments. Illustrated is a system 200 that can include a wireless local area network associated with a wired local area network (LAN). Access point 102 can be in communication with mobile devices 104. Access point 102 is connected to an Ethernet hub or switch 202 for a LAN. Ethernet hub 202 may be connected to one or more electronic devices 204 that can include personal computers, peripheral devices (*e.g.,* facsimile machines, copiers, printers, scanners, *etc.*), servers, and the like. Ethernet hub 202 can be connected to a router 206 that transmits data packets to a modem 208. Modem 208 can transmit data packets to a wide area network (WAN) 210, such as the Internet. System 200 illustrates a single, simple network configuration. Many additional configurations of system 200 including alternative electronic devices are possible. Although system 200 has been illustrated and describe with reference to a LAN, it is possible that system 200 can utilize other technologies including Wireless Wide Area Network and/or Wireless Personal Area Network either separately or concurrently.

System 200 can facilitate scheduling different users to different TTI durations. By way of example and not limitation, if a channel is causing traffic or is slowly changing, it can benefit from a longer TTI for channel estimation. Thus, it can hold a certain amount of energy for channel estimation that provides a particular accuracy. The tradeoff between a short TTI and a long TTI is that with a short TTI some performance is lost, however, it allows a better processing time.

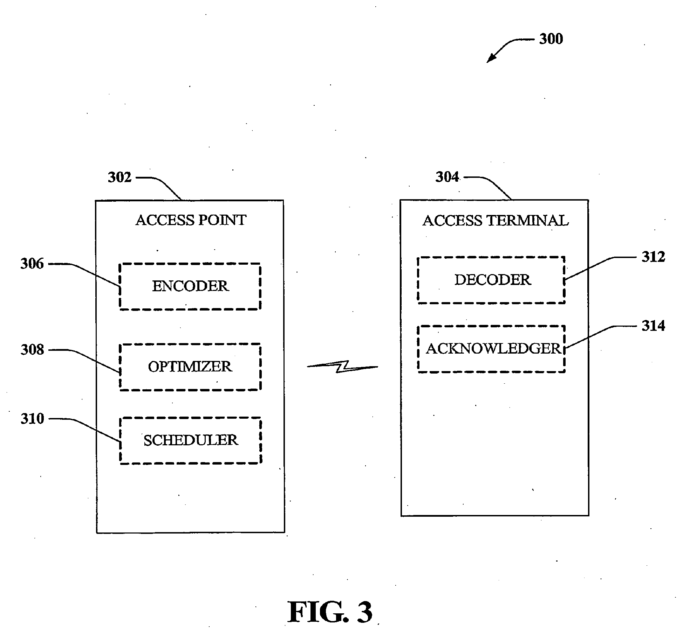

**FIG. 3** illustrates a system 300 for a varied TTI size or duration for forward link and reverse link transmissions in multi-user wireless systems. System 300 includes an access point 302 and an access terminal 304. It should be understood that system 300 can include more than one access point 302 and/or more than one access terminal 304, however, only one of each is illustrated for ease of explanation.

Access point 302 can include an encoder 306, an optimizer 308, and a scheduler 310. These can be functional blocks that represent functions implemented by a processor, software or combination thereof (*e.g.,* firmware). Encoder 306 is configured to encode signals and/or data packets for transmission to access terminal 304. In other embodiments, the optimizer 308 and/or scheduler 310 are associated with access terminal 304 and access terminal 304 performs the functionalities described below.

Optimizer 308 can be configured to optimize a communication between access point 302 and access terminal 304 and/or between two or more access terminals. Optimizer 308 can utilize information regarding a channel condition, bandwidth, packet size, data rate, and other parameters to optimize the communication. This information can be communicated to scheduler 310. Optimizer 308 can further support at least two different interlacing structures or two different kinds of assignments.

Scheduler 310 can be configured to schedule an access terminal (or user thereof) to a particular bandwidth and or TTI. A packet size or the number of bits that can be transmitted together depends on the TTI since a longer TTI allows more bits to be sent together. Scheduler 310 can utilize the information received from optimizer 308 and/or from the access terminal 302 to make a determination as to the TTI size. For example, access terminal 304 can notify access point 302 and/or scheduler 310 to change the scheduling from a short TTI to a long TTI or vice versa. Access terminal 304 can make such a request if it is not getting the entire data packet, has problems with the communication, if there is a large data packet being received and/or sent, is receiving the communication at a high rate, *etc.*

Generally, a short TTI duration can be beneficial for access terminal(s) with good channel conditions since short TTI is instrumental to achieve high pick throughputs. Alternatively, long TTI is can be utilized for users in moderate to poor channel conditions. In a system where both types of users are dynamically supported, flexible partitioning of bandwidth resources between short and long TTI, or an alternative interlacing structure can be provided.

Access terminal 304 can include a decoder 312 and an acknowledgement acknowledger 314. Decoder 312 can decode a received signal and/or data packets therein for processing. Acknowledger 314 can employ an acknowledgment technique in conjunction with an ACK/NACK protocol. In other embodiments, access terminal 304 can include memory (not shown) and a processor (not shown) to allow access terminal to process and/or store information.

Access terminal 304 can report its capabilities, including decoder size and what it can handle in terms of decoding. This information can be transmitted to access point 302, for example, when access terminal 304 connects to system 300 and periodically or continuously while access terminal 304 is associated with system 300. With this information, access point 302 can ascertain whether access terminal 304 is a strong or weak access terminal. For example, access point 302 may schedule access terminal 304 a large bandwidth in a large channel packet. If a channel causes traffic or is slowly changing, it can benefit from a larger TTI for channel estimation because it can hold a certain amount of energy for channel estimation. A shorter TTI allows a better processing time. Thus, for different types of communication (*e.g.,* voice, data, image, video, ...), access point 302 may schedule a larger TTI or a shorter TTI depending on the best optimization for that particular channel and communication.

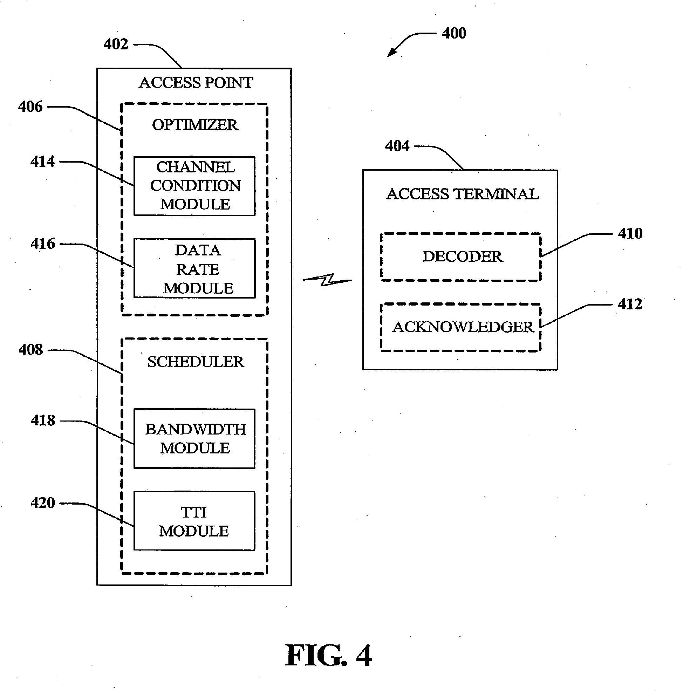

**FIG. 4** illustrates a system 400 for a varied transmission time interval size utilizing a channel condition and other communication parameters. System 400 includes an access point 402 in wireless communication with an access terminal 404. Access point 402 can include an optimizer 406 and a scheduler 408. Access terminal 404 can include a decoder 410 that can decode a received signal and/or data packets therein for processing. Access terminal 404 can also include an acknowledger 412 that can employ an acknowledgment technique in conjunction with an ACK/NACK protocol. It should be understood that these can be functional blocks that represent functions implemented by a processor, software or combination thereof (*e.g.,* firmware).

It should be understood that while the following is discussed with reference to access point 402, in other embodiments the functionalities can be performed by access terminal 404 and communicated to access point 402. Optimizer 406 can include a channel condition module 414 and a data rate module 416. Channel condition module 414 can be configured to analyze the condition of a channel. The channel condition can include parameters, such as the amount of network traffic, the amount of data sent/received within the network, *etc.* Data rate module 416 can be configured to determine a data rate of a current communication and/or an optimal data rate for a particular communication.

Scheduler 408 can include a bandwidth module 418 and a time transmission interval (TTI) module 420. The bandwidth module 418 is configured to determine a bandwidth for a communication. For example, if there are a number of users that operate on long TTI and others on short TTI, it might be desirable to give all the bandwidth to one user. bandwidth module 418 can wait until the other users terminate because they follow different time lines. As the users terminate, it frees up the bandwidth.

The TTI module 420 is configared to schedule a particular communication to a short TTI or a long TTI. The TTI should be as long as possible in order to benefit from channel estimation. This is useful in systems, such as block-hopping systems where the user receives resources in units of blocks.

In some retransmission embodiments, scheduler 408 can add an extra bit to the forward link assignment message or reverse link assignment message, indicating the interlacing structure for the particular packet The LAM would index the same set of hop-ports but now applies to a larger set of physical frames. The scheduler 408 additionally would make sure this LAM does not collide with other LAMs that is may have sent out earlier, especially if those other LAMs have different interlacing structure(s).

In view of the exemplary systems shown and described above, methodologies, which may be implemented in accordance with one or more aspects are provided. While, for purposes of simplicity of explanation, the methodologies are shown and described as a series of acts (or function blocks), it is to be understood and appreciated that the methodologies are not limited by the order of acts, as some acts may, in accordance with these methodologies, occur in different orders and/or concurrently with other acts from that shown and described herein. Moreover, not all illustrated acts may be required to implement a methodology in accordance with one or more aspects of the disclosed embodiments. It is to be appreciated that the various acts may be implemented by software, hardware, a combination thereof or any other suitable means (*e.g.* device, system, process, component) for carrying out the functionality associated with the acts. It is also to be appreciated that the acts are merely to illustrate certain aspects presented herein in a simplified form and that these aspects may be illustrated by a lesser and/or greater number of acts. Moreover, not all illustrated acts may be required to implement the following methodologies. Those skilled in the art will understand and appreciate that a methodology could alternatively be represented as a series of interrelated states or events, such as in a state diagram.

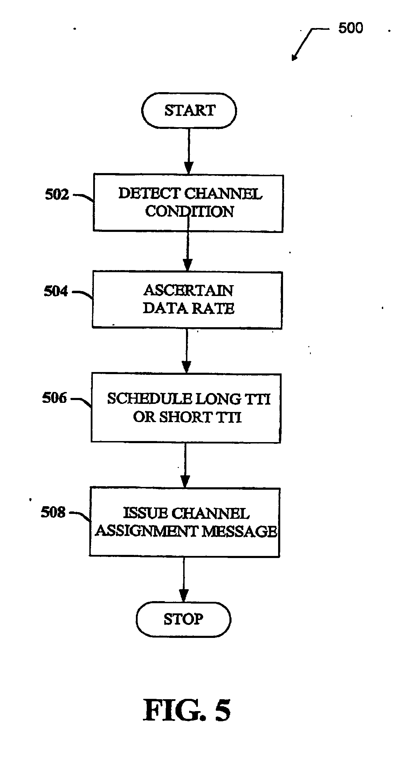

**FIG. 5** illustrates flow chart of a methodology 500 for assigning different users to different transmission time intervals. The method 500 begins, at 502, where a channel condition of a packet communicated by at least one wireless device is detected and measured. The channel condition can be poor or good depending on various criteria including traffic in the wireless network. At 504, a data rate associated with the channel is ascertained. The data rate can be a factor of the amount of bits or data to be communicated. The method continues, at 506 where a determination is made whether to schedule a long transmission time interval or a short transmission time interval to the packet based in part on the detected channel condition and the ascertained data rate. A long transmission time interval can be scheduled if the channel condition is poor and/or if the data rate is low. A short transmission time interval can be scheduled if the channel condition is good and/or the data rate is high. It should be understood that more than one wireless device packet can be analyzes and assigned a transmission time interval according to the methodology 500. For example, multiple packets can be analyzes and can be included in an alternative interlacing structure, which will be discussed more below.

In some embodiments, a channel assignment message is issued, at 508. It should be understood that the channel assignment is optional. This channel assignment message can provide information regarding the desired interlacing structure for a particular packet. According to some embodiments, an extra bit can be added to the FLAM or RLAM to indicate such a structure. For forward-link transmissions, channel assignment can be issued and transmitted on the forward-link before or at substantially the same time as the forward-link packet transmission. For reverse link transmissions, channel assignment can be issued and transmitted on the forward-link before the reverse-link packet transmission. To avoid conflicts between the different types of assignments, the entire bandwidth can be divided into two parts, one for each type of assignments, for example.

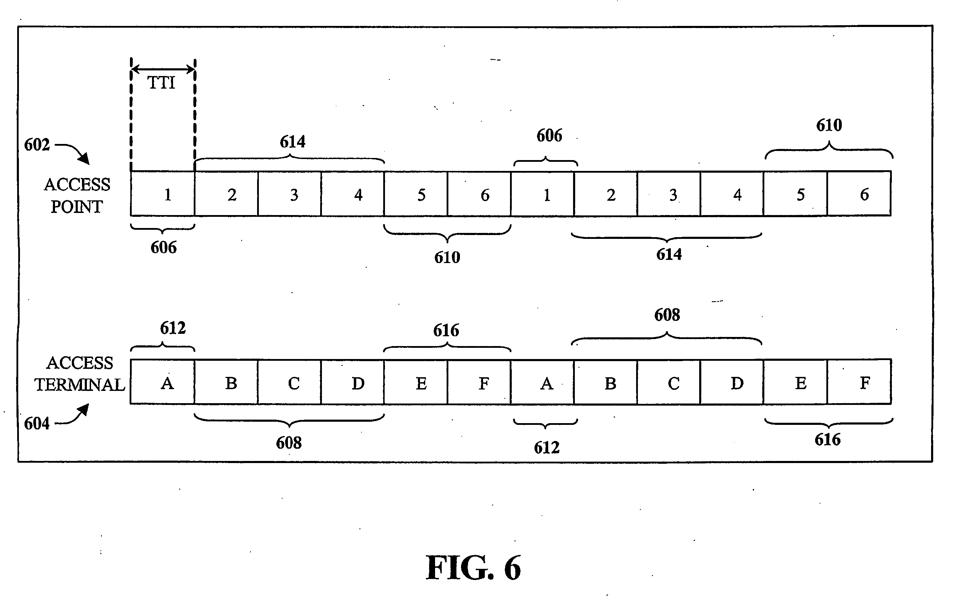

**FIG. 6** illustrates a short transmission time interval having six interlaces. Specifically, illustrated is a six interlace forward-link and reverse-link structure with the same transmission and retransmission delay on each interface. A multiple-access system can concurrently communicate with multiple terminals on the forward and reverse links. The forward link (or downlink) refers to the communication from the base station or access points to the terminals. The reverse link (or uplink) refers to the communication link from the terminals to the base stations or access points. The packet transmission and processing timeline for a single forward-link/reverse-link interface will now be described.

The structure for the access point is illustrated at the top of the figure at 602 having a six interlace forward-link and reverse-link structure, labeled as 1, 2, 3, 4, 5, and 6. The structure for the access terminal is illustrated at the bottom of the figure at 604 having a six interlace forward-link and reverse-link structure, labeled as A, B, C, D, E, and F. It should be understood that while both access point 602 and access terminal 604 are illustrated having two packets of data with a six interlace forward-link and reverse-link structure, there can be more or less packets of data and/or there can be more or less interlaces associated with the structure.

On the forward-link access point 602 transmits an encoded forward-link packet at 606. This represents the first short TIT having the duration illustrated at TTI 1. Access terminal 604 decodes the forward-link packet and encodes and transmits a reverse-link acknowledgment to acknowledge that the last forward-link transmission or hybrid automatic repeat request (H-ARQ) retransmission was successfully received. The acknowledgment can be an acknowledgment technique in conjunction with an ACK/NACK protocol. The decoding and transmission of the reverse-link acknowledgment occur during 608, which represents TTIs B, C, and D. The forward-link ACK is decoded and encoding of the following forward-link transmission or H-ARQ retransmission is performed by access point 602 during TTIs 5 and 6, represented at 610.

On the reverse-link, access terminal 604 transmits an encoded reverse-link packet during TTI A, represented at 612. The reverse-link pack is decoded and a forward-link acknowledgment is sent, at 614, during TTIs labeled 2,3, and 4. The acknowledgment confirms that the latest reverse-link transmission or H-ARQ retransmission was successfully received. At 616, the forward-link ACK is decoded and the following RL-transmission or H-ARQ retransmission is encoded.

It should be appreciated that this can process can repeat itself, as illustrated. Each transmission cycle can be accompanied by an opportunity to transmit a channel assignment message. For forward-link transmission, the channel assignment can be issued by access point 602 and transmitted on the forward-link prior to, or at substantially the same time as the forward-link packet transmission. For reverse-link transmissions, channel assignment can be issued and transmitted on the forward-link prior to the reverse-link packet transmission in a system that includes a centralized (access point) reverse-link scheduler. This is typically the case in some orthogonal reverse-link access systems. It should be understood that access terminal initiated reverse-link assignment may be used in a contention based reverse-link access system, such as DS-CDMA.

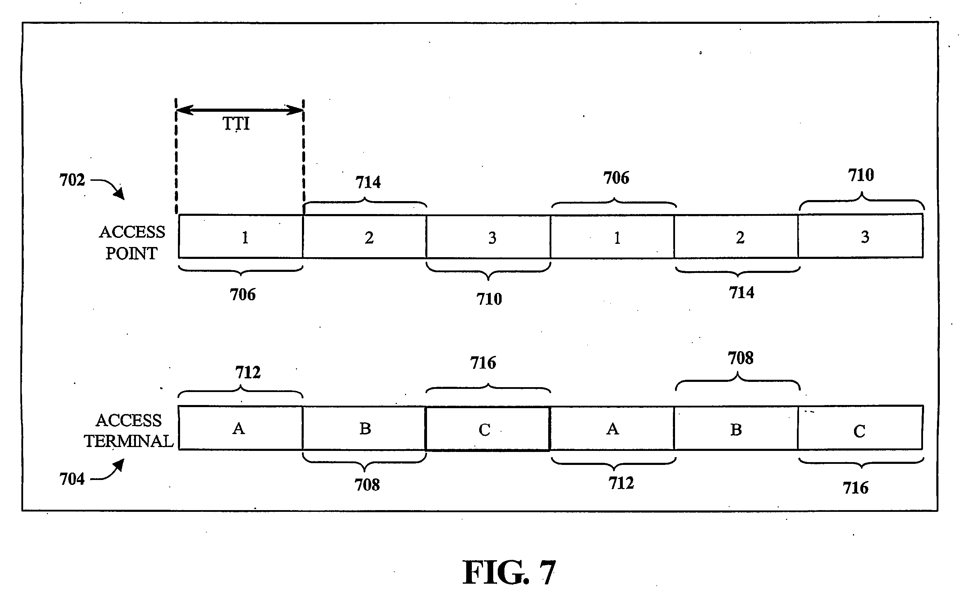

With reference now to **FIG. 7****,** illustrated is a long transmission time interval having three interlaces and in particular illustrated is a three interlace forward-link and reverse-link structure with the same transmission and retransmission delay on each interface. The three interlaces for access point 702 are labeled 1, 2, and 3, while the three interlaces for access terminal 704 are labeled A, B, and C. In this figure, the TTI duration, or the duration of the first transmission of a forward-link/reverse-link packet and the subsequent H-ARQ retransmission thereof, is twice as large as the TTI duration in **FIG. 6** discussed above.

On the forward-link access point 702 transmits an encoded forward-link packet at 706 during the first TTI. Access terminal 704 decodes the forward-link packet and further encodes and transmits a reverse-link acknowledgement during 708. The acknowledger is utilized to communicate successful receipt of the last forward-link transmission or H-ARQ retransmission. The acknowledgment can be an acknowledgment technique in conjunction with an ACK/NACK protocol. A system utilizing the longer TTI, as illustrated, transmits the ACK over two physical (PHY) frames, which can save on the instantaneous power requirement for the ACK. At 716, the forward-link ACK is decoded and encoding of the following forward-link transmission or H-ARQ retransmission is performed. In some embodiments, during the forward-link transmission, channel assignment can be issued by the access point 702 and transmitted on the forward-link either before or at substantially the same time as the forward-link packet transmission.

On the reverse-link, an encoded reverse-link packet is transmitted by access terminal during 712 or TTI "A". At 714, the reverse-link packet is decoded and a forward-link acknowledgment is sent confirming successful receipt of the latest reverse-link transmission or H-ARQ retransmission. During 716, the forward-link ACK is decoded and the following Retransmission or H-ARQ retransmission is encoded. In some embodiments, during the reverse-link transmission, channel assignment can be issued and by access point 702. The assignment can be transmitted on the forward-link before the reverse-link packet transmission in systems, for example, with a centralized reverse-link scheduler. Typically this is the situation in most orthogonal reverse-link access systems. Reverse-link assignment can be used in a contention based reverse-link access systems, such as DS-CDMA.

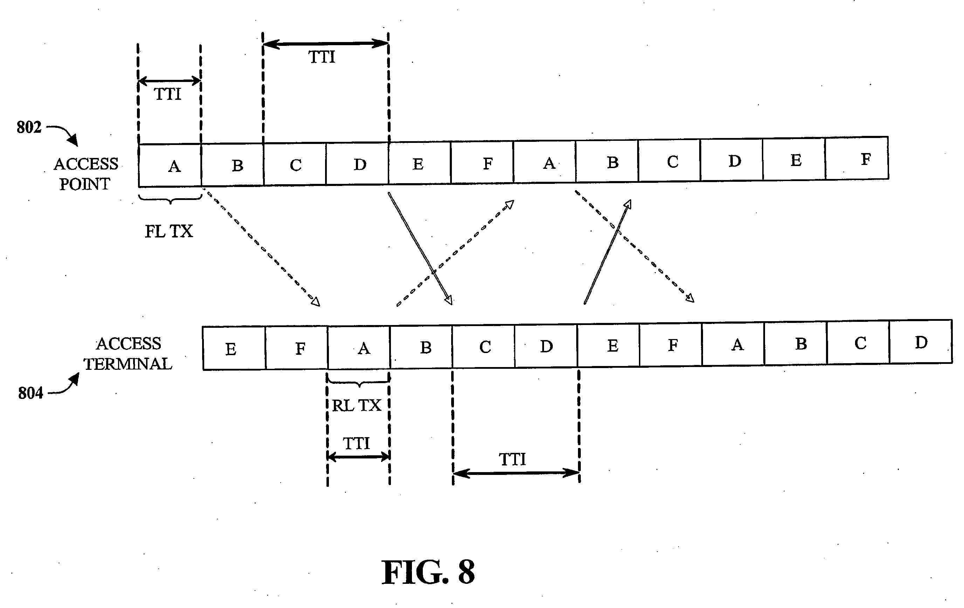

**FIGs. 7** **and** **8** illustrate the situation when a user receives forward-link and reverse-link transmission on a single interface. In general, access terminal can be scheduled multiple packets on multiple interlaces. The multiple packets can correspond to different H-ARQ processes. In addition, the forward-link and reverse-link interfaces assigned to the same access terminal do not have to be aligned in time.

**FIG. 8** illustrates flexible partitions of resources with mixed interlaces or an alternative interlacing structure. The time interval for access point 802 is shown at the top and the time interval for access terminal 804 is shown at the bottom of the figure. Users of short TTIs are represented as A and B, while users of long TTI's are represented as C, D, E, and F. The long TTI is approximately twice as long as the short TTI and an ACK is transmitted over two PHY frames. The alternative interlacing structure can support link budget constrained users. To avoid conflicts in this alternative interlacing structure and the two different kinds of assignments, the entire bandwidth can be divided into two parts. Each part can be dedicated for each type of assignment. It should be understood that the described way of avoiding conflicts is for example purposes only and other means to avoid conflicts between the types of assignments can be utilized.

In some embodiments, a retransmission structure (which can be a two interlace structure) can be supported by adding an extra bit to the FLAM or RLAM that indicates the desired interlacing structure for a particular packet. The LAM can index the same set of hop-ports and can also apply to a larger set of physical frames. A scheduler can ensure that the LAM does not collide with LAMs sent out earlier, especially LAMs with a different interlacing structure. This can be accomplished, for example by preserving a set of channel tree nodes for use with the alternative interlacing structure.

A CDM control channel can puncture some of the tones assigned to a channel with the alternative interlacing structure. In a regular six interlace structure, for example, the CDM control channel punctures an entire channel, which is not assigned. For Frequency Division Duplex, a FLAM in frame 0 implies data transmissions in frames 0 through 5. The acknowledgment (ACK) is transmitted on the RL in frames 8 and 9 and data is retransmitted in frames 12-17.

In order to fully appreciate the subject disclosure, short TTI will now be compared to the long TTI option. This comparison makes that assumption that there is a fixed retransmission time in both cases. With a short TTI duration, it is possible to achieve relatively short air interface latency. The reduction in latency is particularly significant when a scheduler (e.g., scheduler) targets to complete packet transmission in one TTI so that no H-ARQ retransmission is necessary most of the time.

With a short TTI duration, duty cycle of traffic transmission is small relative to a long TTI duration. This means that the required data processing (decoding, scheduling and encoding) rate per interlace is lower compared to the long TTI duration. For the same spectral efficiency and assignment size, a short TTI duration yields a smaller packet size (the number of information bits) compared to the long TTI duration, assuming the same spectral efficiency and the minimum number of H-ARQ transmissions need to decode a packet for both options.

A short TTI duration can lead to a larger number of interlaces compared to a long TTI duration. Each interlace can be accompanied with the corresponding forward-link/reverse-link control such as opportunity for forward-link/reverse-link channel assignments and forward-link/reverse-link ACK. Hence, the number of forward-link/reverse-link control segments will be larger for a short TTI option. Additionally, timing of these control channels is tied to the timing of the respective interlace therefore reducing the benefit of statistical multiplexing and/or joint encoding of these control channels. In some cases, there is a limit to the achievable minimum control overhead as well as the granularity of resource partitioning between control and traffic. These factors imply a higher control overhead for the option with a short TI duration.

Block hopping mode is commonly used for the RL traffic in orthogonal systems (such as OFDMA & LFDMA) and may be beneficial on the FL as well (*e.g.,* OFDMA TDD). A single TTI may include one or more consecutive (TDM) blocks. In a block-hopping mode, channel and interference estimation can be done locally in every block, based on dedicated pilots (*e.g.,* placed within this block). For slowly varying (pedestrian) access terminals, channel estimation performance depends on the number of pilot clusters across the frequency band spanned by the block as well as the total pilot energy. Hence, a longer TTI duration helps to reduce pilot overhead without performance loss. Consequently, a long TTI duration leads to a better link efficiency for slowly varying channels. It is worth mentioning that there is no fundamental link performance penalty for fast varying channels when a long TTI duration is chosen.

High data rate access terminals with good channel conditions tend to receive large channel assignments (in terms of the number of tones per interlace), to take advantage of high spectral efficiency, and can achieve high data rate. For access terminals with very high rates at the link level, the overall throughput may be limited by the air interface turnaround time. Therefore, low air interface latency is important, calling for a short TTI duration, large assignment size and high spectral efficiency to reduce pick load of TX/RX data processing such as decoding. Large assignment per access terminal indicates a relatively low control overhead (since the assignment and ACK overhead do not scale along with the assignment size). Finally, channel estimation accuracy improves at high signal-to-noise ratios (SNRs), hence link performance penalty of a short TTI duration is not that critical. Overall, a short TTI option can be suitable for high data rate access terminals in good channel conditions.

For access terminals with low data rates and moderate to poor channel condition, the overall throughput is can be limited by the link level transmission rate, hence stringent latency requirements do not apply. Due to the limited transmission rate, typical packet sizes are relatively small resulting in modest requirements on the decoding horsepower. Consequently, a somewhat bursty processing can be tolerated. Overall, the key benefits of a short TTI duration are not very important for the access terminals with moderate channel quality. However, a short TTI duration can lead to a very small packet sizes for access terminals in poor channel conditions, given that link budget per interlace reduces along with the TTI duration. A small packet size (on the order of about 100 bits and less) entails substantial losses in coding gain, hence further hurting access terminals in poor channel conditions. From the point of view of link efficiency, it is beneficial to FDM users in poor channel conditions. Hence, multiple users can be scheduled over the same interlace thereby increasing control overhead per interlace. In this context, reducing the number of interlaces (related to the increase in TTI duration) helps to reduce control overhead. Finally, access terminals in poor channel conditions can benefit from a boost in link level performance that comes along with a long TTI duration.

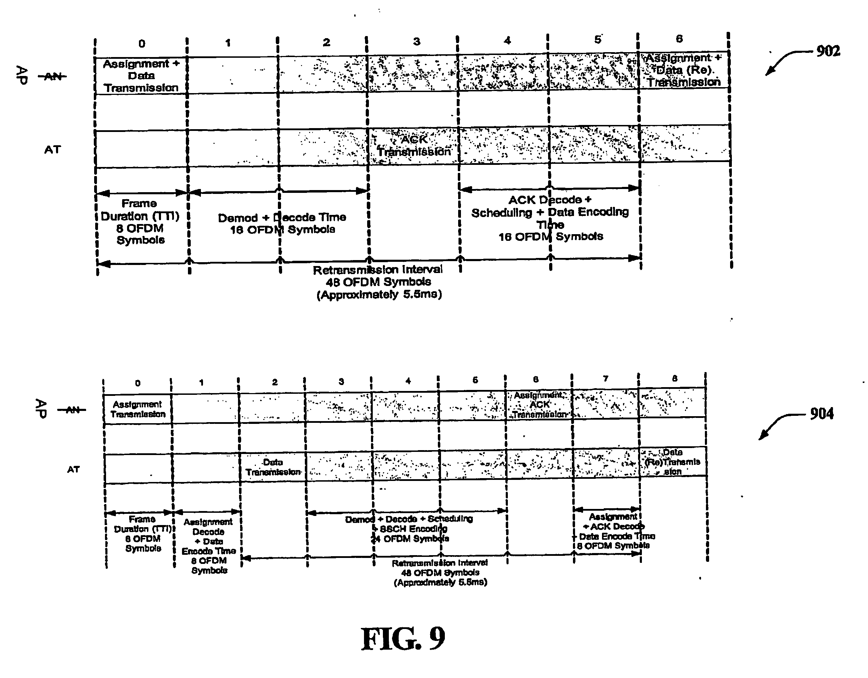

**Fig. 9** illustrates an H-ARQ transmission timing. Both forward and reverse link data transmissions support H-ARQ. To provide H-ARQ related processing time at the access point (AP) and access terminal (AT), a six interlace structure can be utilized for both forward-link and reverse-link. It is to be understood that more or less frames can be utilized and the six interlace structure is for example purposes. Timing of transmissions associated with one of the six interlaces is shown for forward-link, at 902, and for reverse-link, at 904. The timing of the other interlaces is the same but with all transmissions shifted by the same number of PHY frames. This interlace structure ignores the presence of the superframe preamble, *e.g.* PHY frame level transmission timing occurs as if the superframe preamble were not present on forward-link and as if the first PHY frame were not lengthened on reverse-link.

For the forward link, assignments that arrive in forward-link PHY frame *k* apply to the interlace containing forward-link PHY frame *k,* and a forward-link transmission on forward-link PHY frame k is acknowledged on reverse-link PHY frame *k*+3. HARQ retransmissions associated with the transmission that starts in PHY frame k occur in PHY frames k+6n where n is the retransmission index, *n*=0,1, .... This frame structure provides an H-ARQ retransmission latency of ∼5.5 ms with 1.8 ms (2 PHY frames) of processing time at both the AT and the AP.

For the reverse link, assignments that arrive in forward-link PHY frame *k* apply to the interlace containing reverse-link PHY frame *k*+2, and a reverse-link transmission on reverse-link PHY frame k is acknowledged on forward-link PHY frame *k*+2*.* HARQ retransmissions associated with a transmission that starts in PHY frame *k* occur in PHY frames *k*+6n where n is the retransmission index, n=0,1, ....

This frame structure provides an H-ARQ retransmission latency of 5.5 ms with 0.9 ms (1 PHY frame) of processing time at the AT, and 2.7 ms (3 PHY frames) of processing time at the AP. The reduced processing time at the AT is appropriate for reverse-link since the AT only needs to perform assignment demodulation and data packet encoding/modulation - tasks that are much simpler than data packet demodulation.

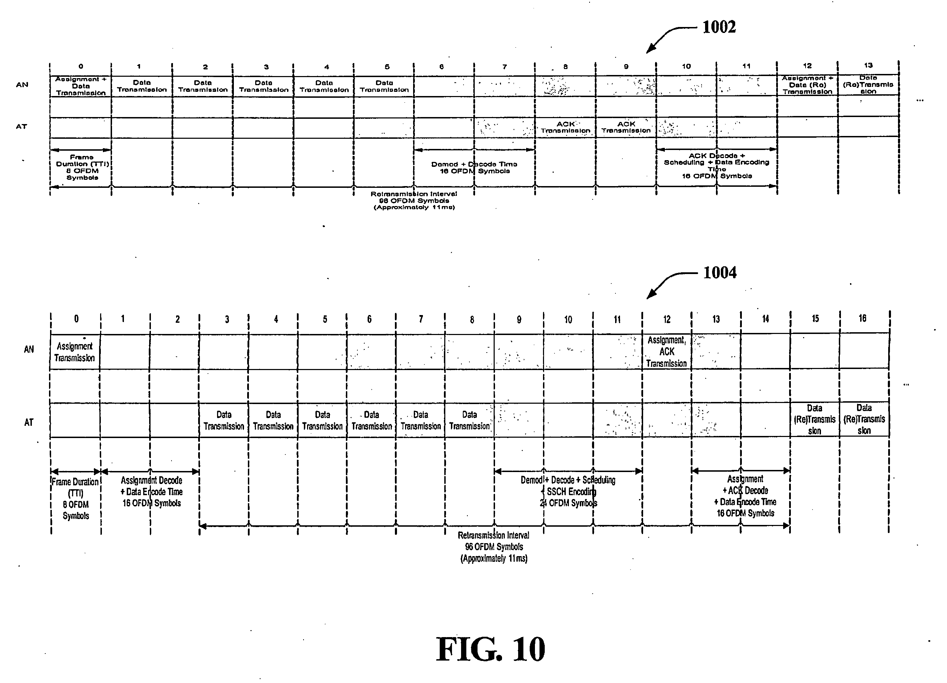

With reference now to **Fig.10****,** illustrated is an H-ARQ interlace structure for extended transmission duration assignments. It should be understood that the examples disclosed herein are merely examples and there may be more or less frames than those shown and described in the figures. In addition to the H-ARQ interlace structure described above, an extended transmission duration assignment is provided. Such assignments can extend transmission over multiple PHY frames and can alter the timing of transmissions and corresponding ACK transmissions relative to the assignments illustrated in the above figures. The extended transmission duration assignments can be useful for link-budget limited users who can benefit from encoding transmissions over a longer transmission duration. Extended transmission duration assignments can create a potential for resource assignment collisions with standard assignments, and the access node (AN) should manage resource assignments to prevent such collisions.

For the forward link, illustrated at the top of figure, at 1002, extended transmission duration assignments that arrive in forward-link PHY frame *k* apply to the interlace containing forward-link PHY frames *k* through *k*+5. A forward-link transmission on forward-link PHY frames *k* through *k*+5 is acknowledged on reverse-link PHY frame *k*+8 through *k*+9. HARQ retransmissions associated with the transmission that starts in PHY frame *k* start in PHY frames *k*+*12n* where *n* is the retransmission index, *n*=0,1, .... Frame structure 1002 provides an H-ARQ retransmission latency of 11 ms with 1.8 ms (2 PHY frames) of processing time at both the access terminal (AT) and the access node.

With reference now to the reverse link, illustrated at the bottom of the figure at 1004, extended transmission duration assignments that arrive in forward-link PHY Frame *k* apply to the interlace containing reverse-link PHY frames *k*+*3* through *k*+*9*. A reverse-link transmission on reverse-link PHY frames *k*+*3* through *k*+*9* is acknowledged on reverse-link PHY frame *k*+*12*. HARQ retransmissions associated with the transmission that starts in PHY frame *k* start in PHY frames *k*+*12n* where *n* is the retransmission index, *n*=0,1, .... This frame structure 1004 provides an H-HARQ retransmission latency of 11 ms with 1.8 ms (2 PHY frames) of processing time at the access terminal and 2.7 ms (3 PHY frames) of processing time at the access node.

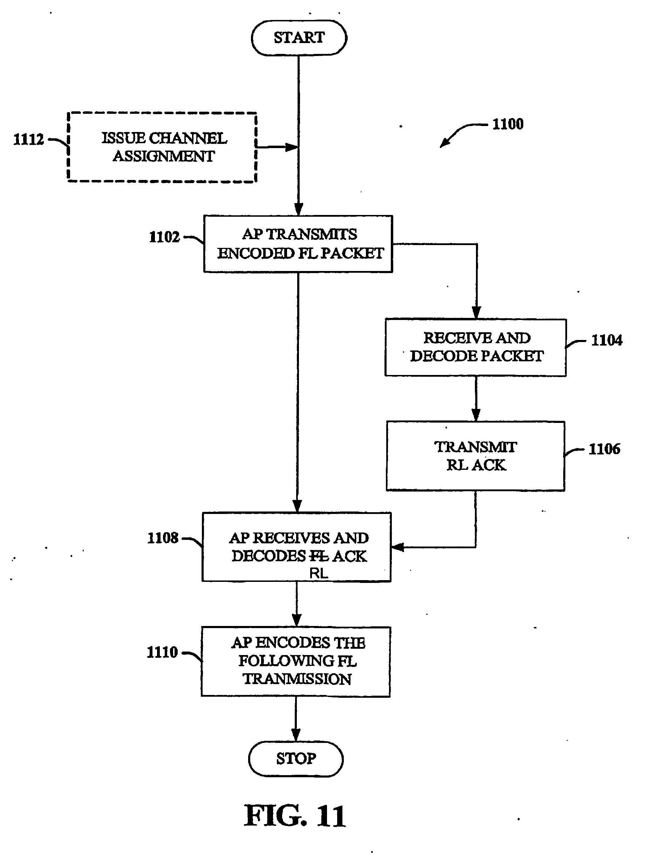

**FIG.11** is a flow chart of a methodology 1100 for transmitting a forward link data packet. The method begins, at 1102, where a forward-link packet is encoded by an access point. The encoded packet is then transmitted to an access terminal. The access terminal receives the forward-link packet and decodes the packet, at 1104. If the packet is successfully decoded, the access terminal encodes a reverse-link acknowledgement (ACK) to acknowledge successful receipt of the forward-link transmission (or hybrid automatic repeat request (H-ARQ) retransmission). The ACK is transmitted to the access point, at 1106. The reverse-link ACK is received by the access point, at 1108, and the access point decodes the reverse-link ACK. The access point, at 1110, then encodes the following forward-link transmission (or H-ARQ retransmission).

In other embodiments, each transmission cycle can be accompanied by an opportunity to transmit a channel assignment message. For forward-link transmission(s), channel assignment is issued, at 1112, and transmitted on the forward-link prior to (or at substantially the same time as) the forward-link packet transmission. It should be noted that block 1112 is shown with dotted lines to indicate that this is optional.

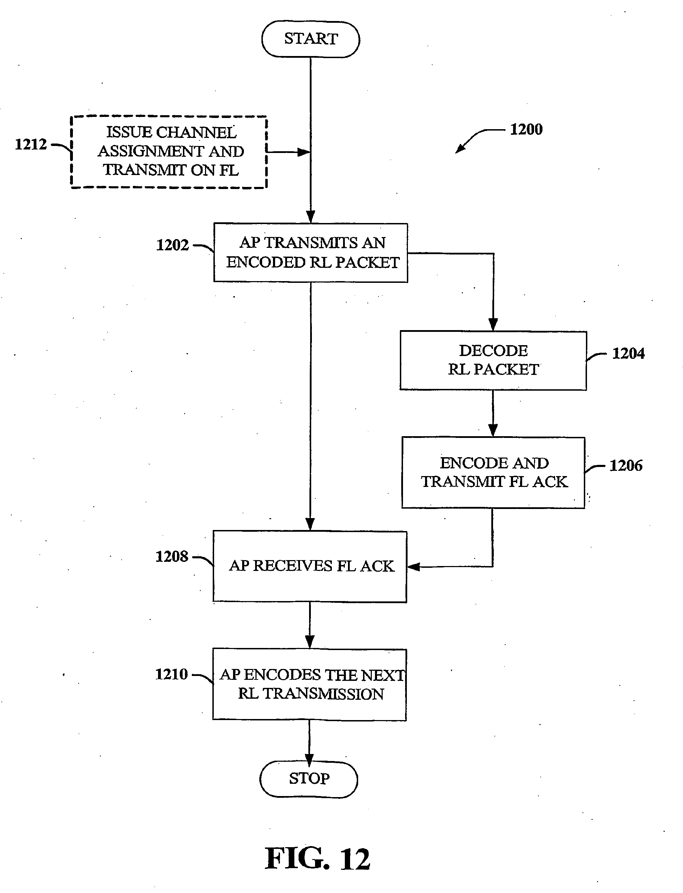

**FIG. 12** is a flow chart of a methodology 1200 for transmitting a reverse-link data packet. The method begins, at 1202, where a reverse-link packet is encoded. This encoding can be performed by an access point. The encoded packet is further transmitted to a destination, which can be an access terminal. The encoded reverse-link packet is received and decoded, at 1204. If the packet (either the latest reverse-link transmission or H-ARQ retransmission) was successfully received and decoded, a forward-link acknowledgment (ACK) is encoded and transmitted, at 1206. The encoding and transmitting of the forward-link acknowledgment can be performed, for example, by an access terminal. At 1208, the forward-link acknowledgment is received, for example, at the access point. The next reverse-link transmission (or H-ARQ retransmission) is encoded, at 1210.

In other embodiments, the transmission cycle should be accompanied by an opportunity to transmit channel assignment message. In these embodiments, prior to transmission of an encoded reverse-link packet, at 1202, a channel assignment can be issued, at 1212. This channel assignment can be transmitted on the forward-link. Channel assignment and transmission is useful in a system with a centralized (access point) reverse-link schedule. Which is typically the case in an orthogonal reverse-link access system. It should be noted that the access terminal initiated reverse-link assignment may be used in a contention based reverse-link access system, such as direct sequence code division multiple access (DS-CDMA).

It should be understood that **FIGs. 11** and **12** are shown and described above with reference to the situation where a user receives a forward-link and reverse-link transmission on a single interlace. In general, every access terminal can be scheduled multiple packets (corresponding to different H-ARQ processes) on multiple interlaces. In addition, forward-link and reverse-link interlaces assigned to the same access terminal do not have to be aligned in time.

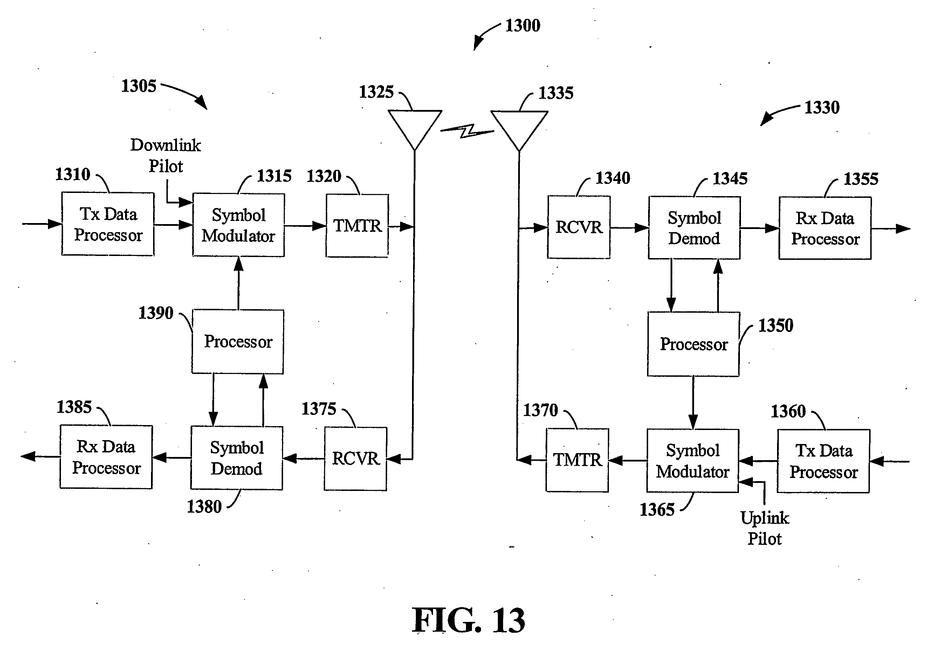

**FIG. 13** illustrates an exemplary wireless communication system 1300. Wireless communication system 1300 depicts one base station and one terminal for sake of brevity. However, it is to be appreciated that system 1300 can include more than one base station or access point and/or more than one terminal or user device, wherein additional base stations and/or terminals can be substantially similar or different for the exemplary base station and terminal described below. In addition, it is to be appreciated that the base station and/or the terminal can employ the systems and/or methods described herein to facilitate wireless communication there between.

Referring now to **Fig. 13****,** on a downlink, at access point 1305, a transmit (TX) data processor 1310 receives, formats, codes, interleaves, and modulates (or symbol maps) traffic data and provides modulation symbols ("data symbols"). A symbol modulator 1315 receives and processes the data symbols and pilot symbols and provides a stream of symbols. A symbol modulator 1315 multiplexes data and pilot symbols and obtains a set of *N* transmit symbols. Each transmit symbol may be a data symbol, a pilot symbol, or a signal value of zero. The pilot symbols may be sent continuously in each symbol period. The pilot symbols can be frequency division multiplexed (FDM), orthogonal frequency division multiplexed (OFDM), time division multiplexed (TDM), frequency division multiplexed (FDM), or code division multiplexed (CDM).

A transmitter unit (TMTR) 1320 receives and converts the stream of symbols into one or more analog signals and further conditions (*e.g.,* amplifies, filters, and frequency upconverts) the analog signals to generate a downlink signal suitable for transmission over the wireless channel. The downlink signal is then transmitted through an antenna 1325 to the terminals. At terminal 1330, an antenna 1335 receives the downlink signal and provides a received signal to a receiver unit (RCVR) 1340. Receiver unit 1340 conditions (*e.g.,* filters, amplifies, and frequency downconverts) the received signal and digitizes the conditioned signal to obtain samples. A symbol demodulator 1345 obtains N received symbols and provides received pilot symbols to a processor 1350 for channel estimation. Symbol demodulator 1345 further receives a frequency response estimate for the downlink from processor 1350, performs data demodulation on the received data symbols to obtain data symbol estimates (which are estimates of the transmitted data symbols), and provides the data symbol estimates to an RX data processor 1355, which demodulates (*e.g.,* symbol demaps), deinterleaves, and decodes the data symbol estimates to recover the transmitted traffic data. The processing by symbol demodulator 1345 and RX data processor 1355 is complementary to the processing by symbol modulator 1315 and TX data processor 1310, respectively, at access point 1305.

On the uplink, a TX data processor 1360 processes traffic data and provides data symbols. A symbol modulator 1365 receives and multiplexes the data symbols with pilot symbols, performs modulation, and provides a stream of symbols. A transmitter unit 1370 then receives and processes the stream of symbols to generate an uplink signal, which is transmitted by the antenna 1335 to the access point 1305.

At access point 1305, the uplink signal from terminal 1330 is received by the antenna 1325 and processed by a receiver unit 1375 to obtain samples. A symbol demodulator 1380 then processes the samples and provides received pilot symbols and data symbol estimates for the uplink. An RX data processor 1385 processes the data symbol estimates to recover the traffic data transmitted by terminal 1330. A processor 1390 performs channel estimation for each active terminal transmitting on the uplink.

Processors 1390 and 1350 direct (*e.g.,* control, coordinate, manage, *etc.*) operation at access point 1305 and terminal 1330, respectively. Respective processors 1390 and 1350 can be associated with memory units (not shown) that store program codes and data. Processors 1390 and 1350 can also perform computations to derive frequency and impulse response estimates for the uplink and downlink, respectively.

For a multiple-access system (*e.g.,* FDMA, OFDMA, CDMA, TDMA, *etc.*), multiple terminals can transmit concurrently on the uplink. For such a system, the pilot subbands may be shared among different terminals. The channel estimation techniques may be used in cases where the pilot subbands for each terminal span the entire operating band (possibly except for the band edges). Such a pilot subband structure would be desirable to obtain frequency diversity for each terminal. The techniques described herein may be implemented by various means. For example, these techniques may be implemented in hardware, software, or a combination thereof. For a hardware implementation, the processing units used for channel estimation may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. With software, implementation can be through modules (*e.g.,* procedures, functions, and so on) that perform the functions described herein. The software codes may be stored in memory unit and executed by the processors 1390 and 1350.

It is to be understood that the embodiments described herein may be implemented by hardware, software, firmware, middleware, microcode, or any combination thereof. When the systems and/or methods are implemented in software, firmware, middleware or microcode, program code or code segments, they may be stored in a machine-readable medium, such as a storage component. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, *etc.* may be passed, forwarded, or transmitted using any suitable means including memory sharing, message passing, token passing, network transmission, *etc.*

For a software implementation, the techniques described herein may be implemented with modules (*e.g.,* procedures, functions, and so on) that perform the functions described herein. The software codes may be stored in memory units and executed by processors. The memory unit may be implemented within the processor or external to the processor, in which case it can be communicatively coupled to the processor through various means as is known in the art.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method for assigning a transmission time interval, comprising:
measuring (502) a channel condition of packet communicated by at least one wireless device;
ascertaining (504) a data rate associated with the at least one wireless device; and
determining (506) whether to schedule a long transmission time interval or a short transmission time interval to the packet based in part on the detected channel condition and the ascertained data rate.

2. The method of claim 1, further comprising:
scheduling a long transmission time interval if the channel condition is poor and there is a low data rate.

3. The method of claim 1, further comprising:
scheduling a short transmission time interval if the channel condition is good and the data rate is high.

4. The method of claim 1, further comprising:
issuing a channel assignment message to be transmitted on a forward-link and a reverse-link.

5. The method of claim 1, further comprising:
detecting a channel condition of at least a second wireless device;
ascertaining a data rate associated with the at least a second wireless device;
determining whether to schedule a long transmission time interval or a short transmission time interval to the at least a second wireless device based in part on the detected channel condition and the ascertained data rate of the at least a second wireless device; and
transmitting the transmission time interval of the first wireless device at substantially the same time as the transmission time interval of the second wireless device.

6. The method of claim 1, further comprising:
adding an extra bit to a FLAM or RLAM to indicate an interlacing structure for the packet.

7. An apparatus for scheduling wireless user devices to different transmission time intervals, comprising:
means for measuring (502) a channel condition of packet communicated by at least one wireless device;
means for ascertaining (504) a data rate associated with the at least one wireless device; and
means for determining (506) whether to schedule a long transmission time interval or a short transmission time interval to the packet based in part on the detected channel condition and the ascertained data rate.

8. The apparatus of claim 7, further comprising:
means for communicating the respective transmission time interval along with a wireless communication.

9. A computer program comprising executable instructions for causing at least one computer to perform a method according to one of the claims 1 to 6 when executed.

## Patentansprüche

1. Verfahren zum Zuordnen eines Übertragungszeitintervalls umfassend:
Messen (502) eines Kanalzustands von Paket, welches durch zumindest ein drahtloses Gerät kommuniziert wird;
Ermitteln (504) einer Datenrate, welche mit dem zumindest einen drahtlosen Gerät assoziiert ist; und
Bestimmen (506), ob ein langes Übertragungszeitintervall oder ein kurzes Übertragungszeitintervall dem Paket zugeordnet werden soll, basierend teilweise auf dem detektieren Kanalzustand und der ermittelten Datenrate.

2. Verfahren gemäß Anspruch 1, weiterhin umfassend:
Ansetzen eines langen Übertragungszeitintervalls wenn der Kanalzustand mangelhaft ist und eine niedrige Datenrate vorhanden ist.

3. Verfahren gemäß Anspruch 1, weiterhin umfassend:
Ansetzen eines kurzen Übertragungszeitintervalls wenn der Kanalzustand gut ist und die Datenrate hoch ist.

4. Verfahren gemäß Anspruch 1, weiterhin umfassend:
Erstellen einer Kanalzuordnungs-Nachricht, welche auf einer Vorwärtsverbindung und einer Rückwärtsverbindung übermittelt werden soll.

5. Verfahren gemäß Anspruch 1, weiterhin umfassend:
Detektieren eines Kanalzustands zumindest eines zweiten drahtlosen Geräts;
Ermitteln einer Datenrate, welche mit dem zumindest einen zweiten drahtlosen Gerät assoziiert ist;
Bestimmen, ob ein langes Übertragungszeitintervall oder ein kurzes Übertragungszeitintervall für ein zumindest zweite drahtlose Gerät angesetzt werden soll, basierend teilweise auf dem detektieren Kanalzustand und der ermittelten Datenrate des zumindest einen zweiten drahtlosen Geräts; und
Übertragen des Übertragungszeitintervalls des ersten drahtlosen Geräts zu der im Wesentlichen gleichen Zeit wie des Übertragungszeitintervalls des zweiten drahtlosen Geräts.

6. Verfahren gemäß Anspruch 1, weiterhin umfassend:
Hinzufügen eines zusätzlichen Bits zu einer FLAM oder RLAM um eine Verschachtelungsstruktur für das Paket anzuzeigen.

7. Vorrichtung zum Zuordnen von drahtlosen Benutzergeräten zu unterschiedlichen Übertragungszeitintervallen aufweisend:
Mittel zum Messen (502) eines Kanalzustands von Paket, welches durch zumindest ein drahtloses Gerät kommuniziert wird;
Mittel zum Ermitteln (504) einer Datenrate, welche mit dem zumindest einen drahtlosen Gerät assoziiert ist; und
Mittel zum Bestimmen (506), ob ein langes Übertragungszeitintervall oder ein kurzes Übertragungszeitintervall dem Paket zugeordnet werden soll, basierend teilweise auf dem detektieren Kanalzustand und der ermittelten Datenrate.

8. Vorrichtung gemäß Anspruch 7 weiterhin aufweisend:
Mittel zum Kommunizieren des jeweiligen Übertragungszeitintervalls zusammen mit einer drahtlosen Kommunikation.

9. Computerprogram aufweisend ausführbare Anweisungen zum Veranlassen zumindest eines Computers um ein Verfahren nach einem der Ansprüche 1 bis 6 durchzuführen wenn das Computerprogramm ausgeführt wird.

## Revendications

1. Un procédé pour attribuer un intervalle de temps d'émission, comprenant :
mesurer (502) une condition de canal d'un paquet communiquée par au moins un dispositif sans fil ;
avérer (504) un débit de données associées à l'au moins un dispositif sans fil ; et
déterminer (506) s'il y a lieu de planifier un intervalle de temps d'émission long ou bien un intervalle de temps d'émission court pour le paquet au moins en partie en fonction de la condition de canal détectée et du débit de données avéré.

2. Le procédé de la revendication 1, comprenant en outre :
planifier un intervalle de temps d'émission long si la condition de canal est médiocre et s'il y a un faible débit de données.

3. Le procédé de la revendication 1, comprenant en outre :
planifier un intervalle de temps d'émission court si la condition de canal est bonne et que le débit de données est élevé.

4. Le procédé de la revendication 1, comprenant en outre :
délivrer un message d'attribution de canal pour qu'il soit émis sur une liaison aller et une liaison retour.

5. Le procédé de la revendication 1, comprenant en outre :
détecter une condition de canal d'au moins un second dispositif sans fil ;
avérer un débit de données associé à l'au moins un second dispositif sans fil ;
déterminer s'il y a lieu de planifier un intervalle de temps d'émission long ou bien un intervalle de temps d'émission court vers le au moins un second dispositif sans fil au moins en partie en fonction de la condition de canal détectée et du débit de données avéré du au moins un second dispositif sans fil ; et
émettre l'intervalle de temps d'émission du premier dispositif sans fil substantiellement en même temps que l'intervalle de temps d'émission du second dispositif sans fil.

6. Le procédé de la revendication 1, comprenant en outre :
ajouter un bit supplémentaire à un FLAM ou à un RLAM pour indiquer une structure entrelacée pour le paquet.

7. Une installation pour planifier des dispositifs utilisateurs sans fil sur des intervalles de temps d'émission différents, comprenant :
des moyens pour mesurer (502) une condition de canal d'un paquet communiquée par au moins un dispositif sans fil ;
des moyens pour avérer (504) un débit de données associées à l'au moins un dispositif sans fil ; et
des moyens pour déterminer (506) s'il y a lieu de planifier un intervalle de temps d'émission long ou bien un intervalle de temps d'émission court pour le paquet au moins en partie en fonction de la condition de canal détectée et du débit de données avéré.

8. L'installation de la revendication 7, comprenant en outre :
des moyens pour communiquer l'intervalle de temps d'émission respectif avec une communication sans fil.

9. Un programme informatique comprenant des instructions exécutables pour faire en sorte qu'au moins un calculateur mette en oeuvre un procédé selon l'une des revendications 1 à 6 lorsqu'elles sont exécutées.
